# EUROPEAN PATENT APPLICATION

(11) **EP 2 821 178 A1**
(43) Date of publication of application: **07.01.2015**
(21) Application number: 12870063.0
(22) Date of filing: 27.02.2012
(51) Int. Cl.: B23P 19/00, B23P 21/00, B25J 13/08

(54) **ROBOTIC SYSTEM**

(71) Applicant: Kabushiki Kaisha Yaskawa Denki, Kitakyushu-shi, Fukuoka 806-0004 (JP)
(72) Inventor: MATSUFUJI, Kenji, Kitakyushu-shi Fukuoka 806-0004 (JP); OKAWA, Ken, Kitakyushu-shi Fukuoka 806-0004 (JP); MURAYAMA, Takuya, Kitakyushu-shi Fukuoka 806-0004 (JP); MOTONAGA, Kenichi, Kitakyushu-shi Fukuoka 806-0004 (JP)
(74) Representative: Grünecker, Kinkeldey, Stockmair & Schwanhäusser
(86) International application number: PCT/JP2012/054759
(87) International publication number: WO 2013/128542

(57) **Abstract**

It is an object of the present invention to provide a robot system capable of assembling a product having a movable member with sufficient accuracy. In order to achieve the object, a robot system (1) according to one aspect of an embodiment includes a robot (10) and a control unit (110). The robot (10) performs multi-axis operations based on instructions on the operations from the control unit (110). The control unit (110) causes a power source to supply power to a partially fabricated item that includes a movable member that is able to be controlled by receiving power, and instructs the robot (10) to perform an operation of attaching a predetermined member to the partially fabricated item while controlling the movable member.

## Description

### Field

The disclosed embodiment relates to a robot system.

### Background

Conventionally, various robot systems have been developed that can achieve an increase in efficiency of production lines by causing robots to perform predetermined work, previously performed manually, in the production lines or the like of products.

As an example of this type of robot system, there exists an assembly system or the like that uses a robot to transfer components such as a base plate and a side plate, and join the components each other so as to assemble a casing (see Patent Literature 1, for example).

### Citation List

### Patent Literature

Patent Literature 1: Japanese Patent Application Laid-open No. 2003-340657

### Summary

### Technical Problem

However, in the above-mentioned robot system, there is a room for further improvements in terms of assembling of a product having a movable member with sufficient accuracy.

For example, in a case where a motor having a shaft as a movable member is assembled, when a particular member is attached to the shaft, relative displacement between the shaft and the component may arise during attachment.

One aspect of an embodiment has been made in view of this, and its object is to provide a robot system capable of assembling a product having a movable member with sufficient accuracy.

### Solution to Problem

A robot system according to an aspect of the embodiment includes a robot and a control unit. The robot performs multi-axis operations based on instructions on the operations from the control unit. The control unit causes a power source to supply power to a partially fabricated item that includes a movable member that is able to be controlled by receiving power, and instructs the robot to perform an operation of attaching a predetermined member to the partially fabricated item while controlling the movable member.

### Advantageous Effects of Invention

According to one aspect of the embodiment, a product having a movable member can be assembled with sufficient accuracy.

### Brief Description of Drawings

FIG. 1 is a schematic plan view illustrating an entire constitution of a robot system according to an embodiment.
FIG. 2A is a schematic front view illustrating the constitution of a robot.
FIG. 2B is a schematic plan view illustrating the constitution of the robot.
FIG. 3A is a perspective schematic view illustrating the constitution of a left hand.
FIG. 3B is a schematic front view illustrating the constitution of a second left gripper.
FIG. 3C is a schematic side view illustrating the constitution of the second left gripper.
FIG. 4A is a schematic plan view illustrating the constitution of a connector unit.
FIG. 4B is a schematic side view illustrating the constitution of the connector unit.
FIG. 5 is a perspective schematic view illustrating the constitution of a right hand.
FIG. 6 is a view illustrating the outline of procedures for attachment of an encoder.
FIG. 7A is an explanatory view for explaining the procedures for attachment of the encoder.
FIG. 7B is an explanatory view for explaining the procedures for attachment of the encoder.
FIG. 7C is an explanatory view for explaining the procedures for attachment of the encoder.
FIG. 7D is an explanatory view for explaining the procedures for attachment of the encoder.
FIG. 7E is an explanatory view for explaining the procedures for attachment of the encoder.
FIG. 7F is an explanatory view for explaining the procedures for attachment of the encoder.
FIG. 7G is an explanatory view for explaining the procedures for attachment of the encoder.
FIG. 7H is an explanatory view for explaining the procedures for attachment of the encoder.
FIG. 7I is an explanatory view for explaining the procedures for attachment of the encoder.
FIG. 7J is an explanatory view for explaining the procedures for attachment of the encoder.
FIG. 7K is an explanatory view for explaining the procedures for attachment of the encoder.
FIG. 7L is an explanatory view for explaining the procedures for attachment of the encoder.
FIG. 7M is an explanatory view for explaining the procedures for attachment of the encoder.
FIG. 7N is an explanatory view for explaining the procedures for attachment of the encoder.

### Description of Embodiment

Hereinafter, with reference to accompanying drawings, an embodiment of a robot system disclosed in the present application are explained in detail. Here, the present invention is not limited to the embodiment described below.

In the embodiment described below, it is assumed that a motor that completes the assembly of the main part thereof in a previous process is a partially fabricated item, and a shaft of the motor is a movable member. In addition, hereinafter, the explanation is made by taking a robot system that attaches an encoder to the anti-load side of the motor to complete the motor as a product, as an example.

Furthermore, in the embodiment described below, it is assumed that a motor that completes the assembly of the main part thereof in a previous process is a partially fabricated item, and the shaft of the motor is a movable member. In addition, hereinafter, the explanation is made by taking a robot system that attaches a position detector to the anti-load side of the motor to complete the motor as a product, as an example. Here, the explanation is made by taking a case where the position detector is an encoder, as an example. However, the present invention is not limited to this case, and the position detector may be a resolver, for example.

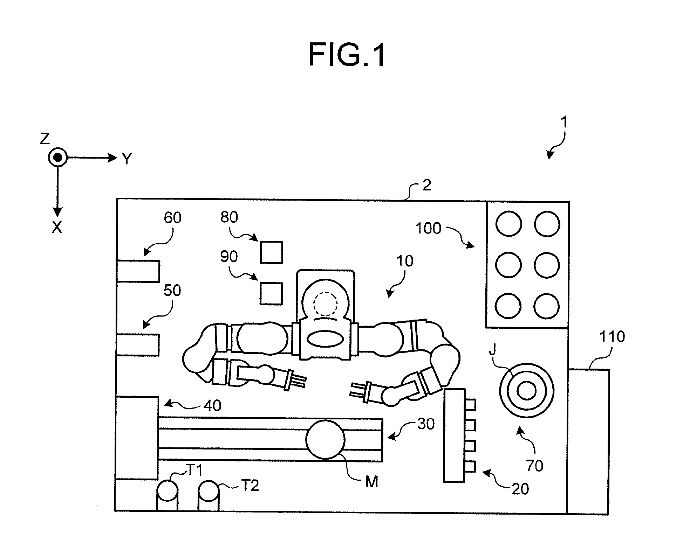

FIG. 1 is a schematic plan view illustrating an entire constitution of a robot system 1 according to an embodiment. Here, in FIG. 1, for the sake of understandable explanations, the three-dimensional orthogonal coordinate system is illustrated including the Z-axis in which the vertical upward direction on the paper on which Fig. 1 is drawn corresponds to the positive direction. There may be a case that such an orthogonal coordinate system is illustrated also in other drawings used for the following explanations. Here, in the present embodiment, the positive direction of the X-axis corresponds to the forward direction of a robot 10.

Furthermore, hereinafter, in a constitutional feature constituted of a plurality of parts, there may be a case that a symbol is given to only one of the parts, and symbols to be given to the other parts are omitted. In this case, the one of the parts to which the symbol is given and the other parts are identical with each other in constitution.

As illustrated in FIG. 1, the robot system 1 includes a cell 2 that forms a work space having a rectangular parallelepiped shape. Furthermore, the robot system 1 includes a robot 10, a connector unit 20, a motor transfer mechanism 30, a parts press-fit unit 40, a first parts feeder 50, a second parts feeder 60, a jig unit 70, a grease application unit 80, a camera unit 90, and an encoder stocker 100 in the inside of the cell 2.

The robot system 1 includes a control unit 110 arranged on the outside of the cell 2. The control unit 110 is connected with the respective units including the robot 10 that are arranged in the inside of the cell 2 in an information transmissive manner.

Here, the control unit 110 is a controller that controls operations of each unit connected therewith, and includes various kinds of control devices, arithmetic processing units, a storage device, and a direct-current power source and an inverter that supply power to a motor M. Furthermore, in FIG. 1, for the sake of convenience, the control unit 110 in one cabinet is illustrated. The control unit 110 may also be constituted of a plurality of cabinets. The control unit 110 may be arranged in the inside of the cell 2.

The cell 2 has an opening that is not illustrated in the drawings, and the motor M as a partially fabricated item is carried in from a previous process through the opening. Here, a transfer unit for the motor M particularly imposes no restriction thereon. Therefore, a robot in a previous process may place the motor M directly in front of the robot 10 in the present process, and the motor M may also be transferred to a place in front of the robot 10 by way of a conveyor or the like.

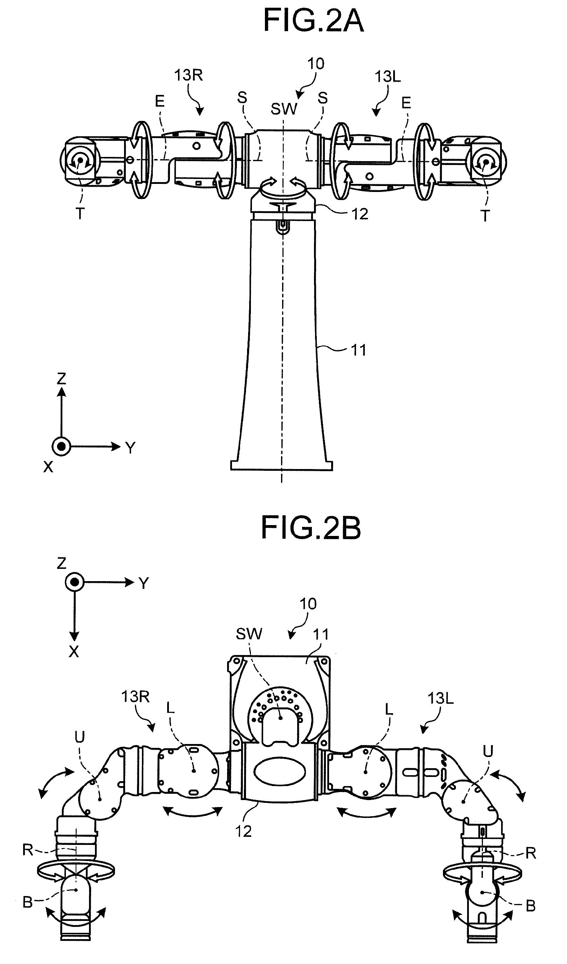

The robot 10 is a dual arm manipulator that operates so as to attach an encoder to the motor M upon receiving an operation instruction from the control unit 110, and includes a robot hand (hereafter, referred to as "hand") described later for each robot arm (hereafter, referred to as "arm"). Here, the detailed constitution of the robot 10 is explained later in conjunction with FIG. 2A to FIG. 3C, and FIG. 5.

The connector unit 20 is a unit in which a connector to be connected to the motor M or the encoder is suspended by way of a connector hook described later.

Here, in the robot system 1, during attachment of the encoder, the connector suspended from the connector unit 20 is connected to the motor M to supply power to the motor M and, at the same time, while the movement of the shaft is controlled, the encoder is attached. In addition, the connection of the connector is performed by the robot 10 upon receiving the operation instruction from the control unit 110.

Here, the outline of a method for attaching the encoder is described. To be more specific, first of all, the control unit 110 instructs the direct-current power source to supply power to the motor M to apply what is called an "excitation lock" to the motor M. That is, irrespective of the presence or absence of the brake of the motor M, the movement of the shaft in the rotational direction is restricted.

Such a constitution can prevent rotational deviation of the shaft at the time of attachment of the encoder, thereby facilitating accurate assembly. Furthermore, what is called a "reference point return" operation can also be performed that determines a rotation reference position (hereinafter, referred to as "reference point") of the motor M, thus enabling accurate attachment of the encoder based on the reference point.

Furthermore, during attachment of the encoder, the fitting state of an intermediate member (described later) fitted onto the shaft is inspected while rotating the shaft. Due to such a constitution, the tilting condition of the intermediate member can be easily inspected with respect to the shaft thus easily performing accurate assembly. Here, in rotating the shaft, the control unit 110 instructs the power source to supply power via the inverter.

In addition, a connector corresponding to the encoder is also connected to the encoder, and encoder-side information is acquired. Based on the acquired information, for example, the position of the encoder is set so that the reference points of the motor M and the encoder coincide accurately with each other. Accordingly, the accurate assembly can be performed.

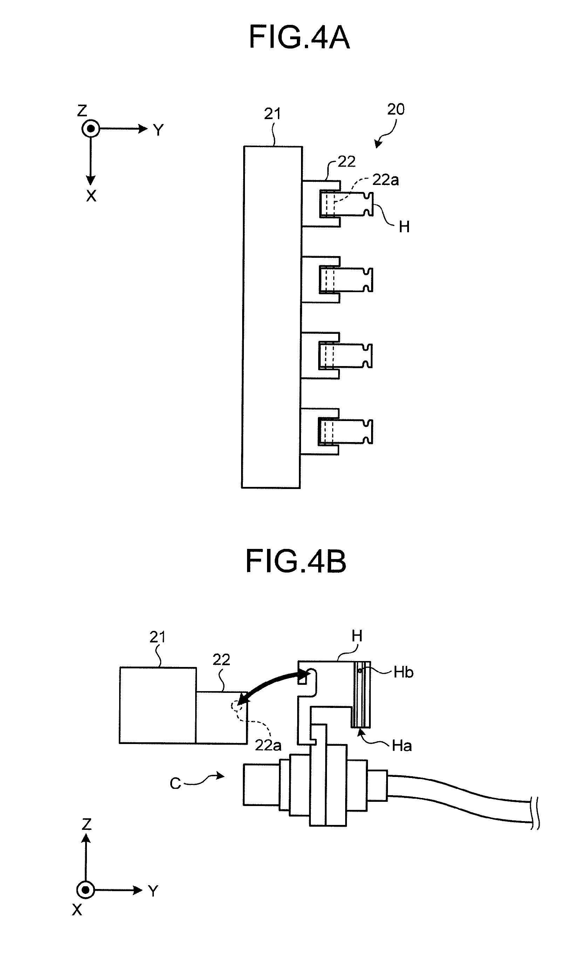

Here, the detailed constitution of the connector unit 20 is explained later in conjunction with FIG. 4A and FIG. 4B.

The explanation of the outline of the method for attaching the encoder is concluded here and next, the motor transfer mechanism 30 in FIG. 1 is explained. The motor transfer mechanism 30 is a mechanism that slides the motor M along the Y-axis direction in FIG. 1. In the example illustrated in FIG. 1, the motor transfer mechanism 30 moves the motor M back and forth between a position in front of the robot 10 and the parts press-fit unit 40.

The parts press-fit unit 40 is a unit that press-fits, during attachment of the encoder, an Oldham hub (hereinafter, referred to as "first part") that is an intermediate member attached to the shaft of the motor M.

The first parts feeder 50 is a unit that feeds the first part to the inside of the cell 2. The second parts feeder 60 is a unit that feeds one of the intermediate members referred to as "slide" to the inside of the cell 2. Here, the "slide" is hereinafter referred to as "second part".

The jig unit 70 is a housing unit of a jig J used for attachment of the first part. The grease application unit 80 is a unit that applies grease to the first part, the second part, or the like. Here, in FIG. 1, although one grease application unit 80 is illustrated, the grease application unit 80 may be arranged individually for each part.

The camera unit 90 is an image pick-up device having a particular image pick-up area. A plurality of camera units 90 may be provided depending on the types of the parts, or the like. Here, although it is unclear in FIG. 1, the grease application unit 80 and the camera unit 90 are suspended above the right shoulder portion of the robot 10.

The encoder stocker 100 is a housing unit of the encoder to be attached to the motor M.

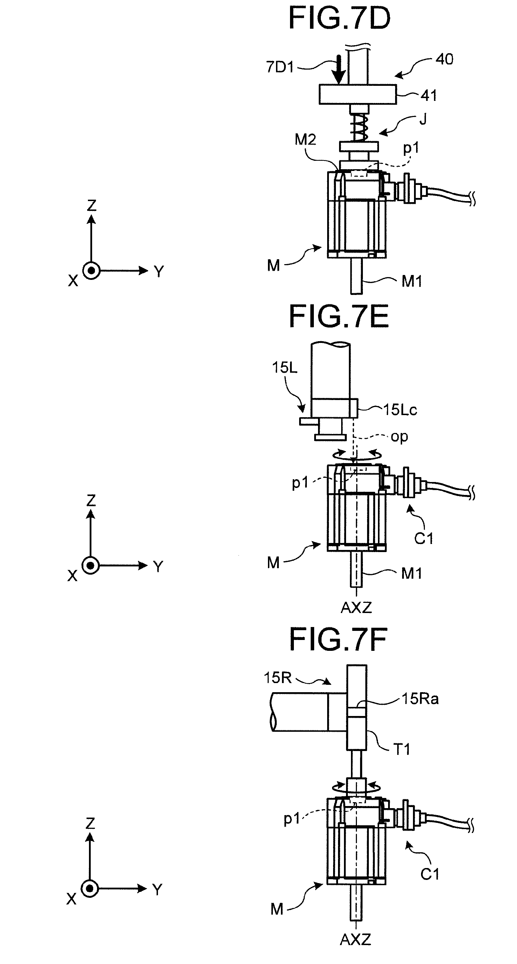

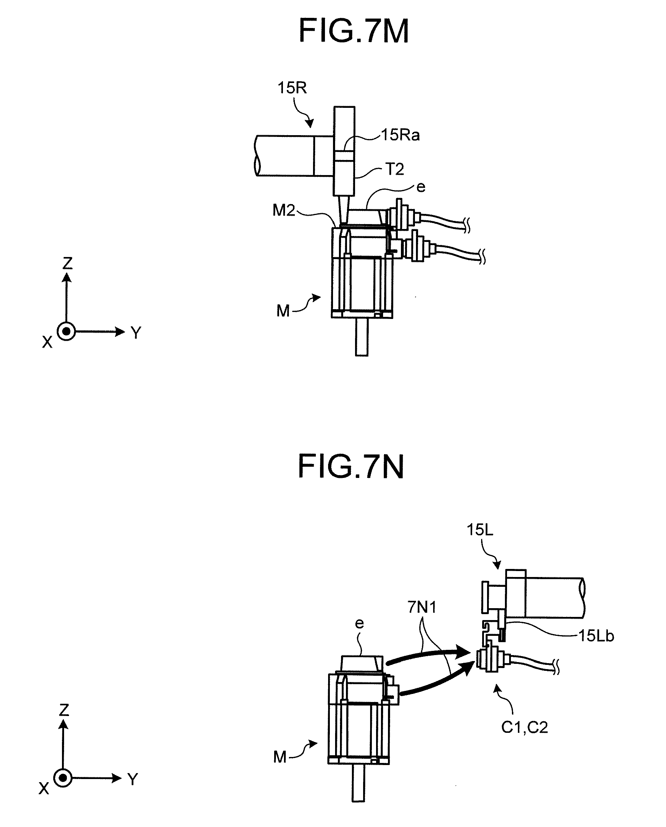

The robot system 1 has a first tool T1 and a second tool T2 that are arranged on the wall surface of the cell 2. The first tool T1 and the second tool T2 are set in a detachable manner, and used by being gripped by a right hand attached to a right arm depending on the operations performed by the robot 10. The first tool T1 and the second tool T2 are explained later in conjunction with FIG. 7F and FIG. 7M.

Next, a constitution example of the robot 10 is explained in conjunction with FIG. 2A and FIG. 2B. FIG. 2A is a schematic front view illustrating the constitution of the robot 10, and FIG. 2B is a schematic plan view illustrating the constitution of the robot 10.

As illustrated in FIG. 2A, the robot 10 is a dual-arm type multi-axis robot. To be more specific, the robot 10 includes a pedestal 11, a body 12, a left arm 13L, and a right arm 13R.

The pedestal 11 is fixed on the floor or the like in the inside of the cell 2 (see FIG. 1), and supports the body 12 at a distal end portion thereof in a swingable manner about an axis SW (see a two-headed arrow about the axis SW).

The body 12 is supported by the pedestal 11 at the proximal end portion thereof, and supports the proximal end portion of the right arm 13R at the right shoulder portion thereof in a rotatable manner about an axis S. In the same manner as above, the body 12 supports the proximal end portion of the left arm 13L at the left shoulder portion thereof in a rotatable manner about an axis S (see a two-headed arrow about the axis S in each of the right arm 13R and the left arm 13L).

Each of the left arm 13L and the right arm 13R is constituted of a plurality of links and joints, and set, in each joint from the proximal end portion thereof to the distal end portion thereof, in a rotatable manner about the axis S, an axis E, and an axis T (see two-headed arrows about the axis S, the axis E, and the axis T).

As illustrated in FIG. 2B, each of the left arm 13L and the right arm 13R is set in a rotatable manner about an axis L, an axis U, an axis R, or an axis B (see two-headed arrows about the axis L, the axis U, the axis R, and the axis B). That is, the robot 10 has 7 axes per arm.

Accordingly, the robot 10 performs, based on operation instructions from the control unit 110, various multi-axis operations in which the operation of the two arms each having seven axes and the rotational operation about the axis SW are combined with each other. Here, to be more specific, the operation instructions from the control unit 110 are notified as drive instructions with respect to each actuator mounted on each joint of the robot 10.

Here, the left hand is attached to the distal end portion of a component rotated about the axis T of the left arm 13L, and the right hand is attached to the distal end portion of a component rotated about the axis T of the right arm 13R.

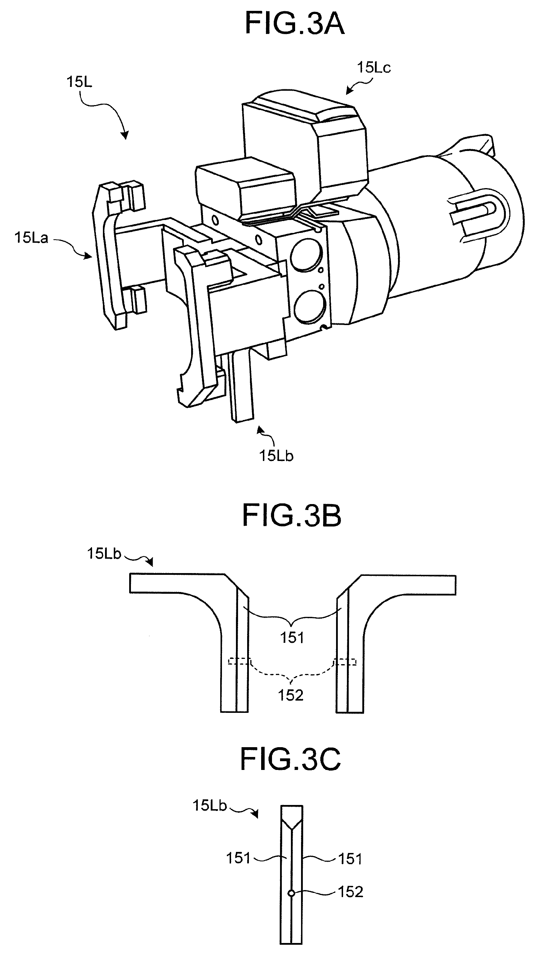

Next, a constitution example of the left hand is explained in conjunction with FIG. 3A to FIG. 3C. FIG. 3A is a perspective schematic view illustrating the constitution of a left hand 15L. FIG. 3B is a schematic front view illustrating the constitution of a second left gripper 15Lb, and FIG. 3C is a schematic side view illustrating the constitution of a second left gripper 15Lb.

As illustrated in FIG. 3A, the left hand 15L includes a first left gripper 15La, a second left gripper 15Lb, and a sensor unit 15Lc. The first left gripper 15La has two gripping jaws each of which is formed in a U-shape at the distal end portion thereof, and grips a jig J or the encoder with the gripping jaws.

As illustrated in FIG. 3B, the second left gripper 15Lb has two gripping jaws, and grips a connector hook described later with the gripping jaws. Here, as illustrated in FIG. 3B, the second left gripper 15Lb has a gripping face 151 and a gripping pin 152 that are engaged with the connector hook.

Two gripping faces 151 are formed, as illustrated in FIG. 3C, in one gripping jaw of the second left gripper 15Lb, and the two gripping faces 151 are in line contact with each other. That is, the gripping jaw of the second left gripper 15Lb is formed in an approximately edge shape.

Here, a constitution example of the connector unit 20 is explained in conjunction with FIG. 4A and FIG. 4B. FIG. 4A is a schematic plan view illustrating the constitution of the connector unit 20, and FIG. 4B is a schematic side view illustrating the constitution of the connector unit 20.

As illustrated in FIG. 4A, the connector unit 20 includes a base 21 and a plurality of suspension units 22 (four units, in this case). Each of the suspension units 22 has a suspension shaft 22a, and a connector hook H is suspended by way of the suspension shaft 22a.

As illustrated in FIG. 4B, the connector C is connected to the connector hook H, and the second left gripper 15Lb grips and moves the connector hook H to transfer the connector C back and forth between the motor M or the encoder, and the connector unit 20 (see a two-headed arrow in FIG. 4B).

Here, as illustrated in FIG. 4B, the connector hook H has an engagement groove Ha and an engagement hole Hb that are formed therein. Each of the side surfaces of the engagement groove Ha is formed so that the side surface is inclined from an outer peripheral portion toward a bottom portion with a downward gradient, and the gripping jaw of the second left gripper 15Lb that is formed in an approximately edge shape is engaged with the engagement groove Ha.

That is, in engaging the engagement groove Ha with the gripping jaw that are formed in an above-mentioned shape, even when a slight misalignment of a gripping position occurs, the gripping jaw of the second left gripper 15Lb can be guided to the engagement groove Ha thus gripping the connector hook H. Here, the engagement hole Hb is engaged with the gripping pin 152 described above and, in order to acquire the same advantageous effect as the case of the engagement groove Ha, the peripheral edge portion of the engagement hole Hb may be chamfered.

Incidentally, FIG. 4A illustrates the example in which the four suspension units 22 are provided, and the connectors C different in type from each other are respectively suspended from the four suspension units 22.

That is, a connector port that receives the connector C of the motor M usually differs depending on the structure thereof, such as the presence or absence of a brake. Accordingly, the connectors C different in type from each other are suspended from the suspension units 22 thus assembling properly the motors M even when the motors M are different in type from each other.

Here, the above-mentioned point is also applicable to the connector C of the encoder. Therefore, it is preferable that the connectors C that are different from each other and corresponding to the types of the motors M or the encoders be suspended from the suspension units 22.

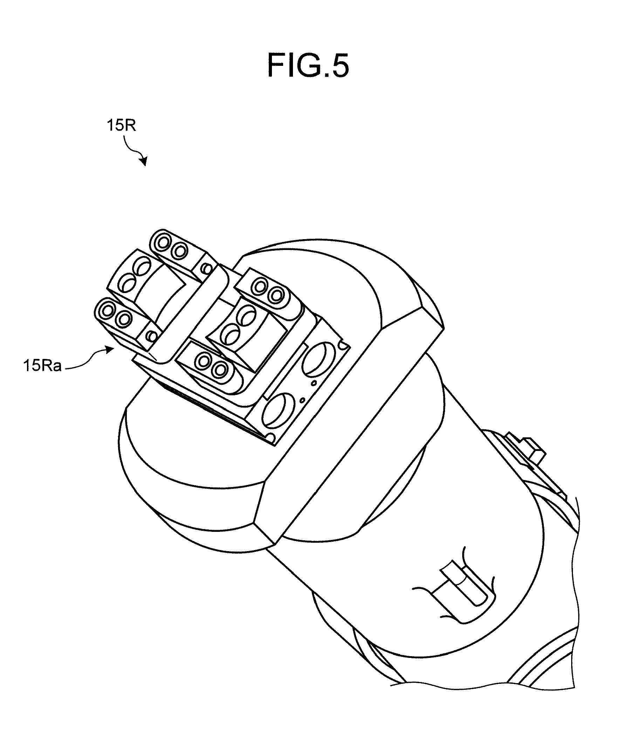

Next, a constitution example of the right hand is explained in conjunction with FIG. 5. FIG. 5 is a perspective schematic view illustrating the constitution of a right hand 15R.

As illustrated in FIG. 5, the right hand 15R includes a gripper 15Ra. The gripper 15Ra has two gripping jaws, and grips the above-mentioned first part and second part with the gripping jaws. In order to adjust a direction of a third part (described later) attached to the encoder in advance, there may also be a case that the gripper 15Ra grips the third part. In addition, as described previously, there may also be a case that the gripper 15Ra grips the first tool T1 and the second tool T2.

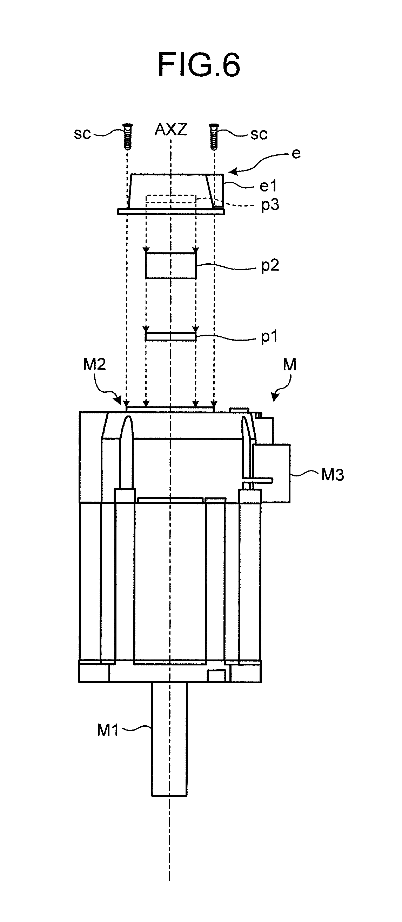

Next, the outline of procedures for attachment of the encoder is explained in conjunction with FIG. 6. FIG. 6 is a view illustrating the outline of procedures for attachment of an encoder e.

As illustrated in FIG. 6, the motor M includes a shaft M1 and a bracket M2 arranged on the anti-load side thereof. Here, an axis AXZ represents an axis line that passes through the axial center of the shaft M1.

Here, during attachment of the encoder e, first of all, a first part p1 is attached to the end portion (not illustrated in the drawings) on the anti-load side of the shaft M1 (see dashed arrows extending downwardly from the first part p1 in FIG. 6).

Subsequently, the second part p2 is attached to the first part p1 attached (see dashed arrows extending downwardly from the second part p2 in FIG. 6).

The third part p3 that is the Oldham hub attached to the encoder e in advance is attached to the second part p2 attached (see dashed arrows extending downwardly from the third part p3 in FIG. 6).

The encoder e is fixed to the bracket M2 with the use of screws sc (see dashed arrows each extending downwardly from the screw sc in FIG. 6).

Here, while the procedures for attachment of the encoder e are performed, the connector C corresponding to the type of the motor M and selected by the robot 10 is connected to the connector port M3 of the motor M. When the encoder e is temporarily placed on the bracket M2, the connector C corresponding to the type of the encoder e and selected by the robot 10 is connected to the connector port e1 of the encoder e.

After the completion of attachment of the encoder e, both of the connectors C connected to the connector port M3 and the connector port e1 are removed by the robot 10. Accordingly, the procedures for attachment of the encoder e with respect to one motor M are completed.

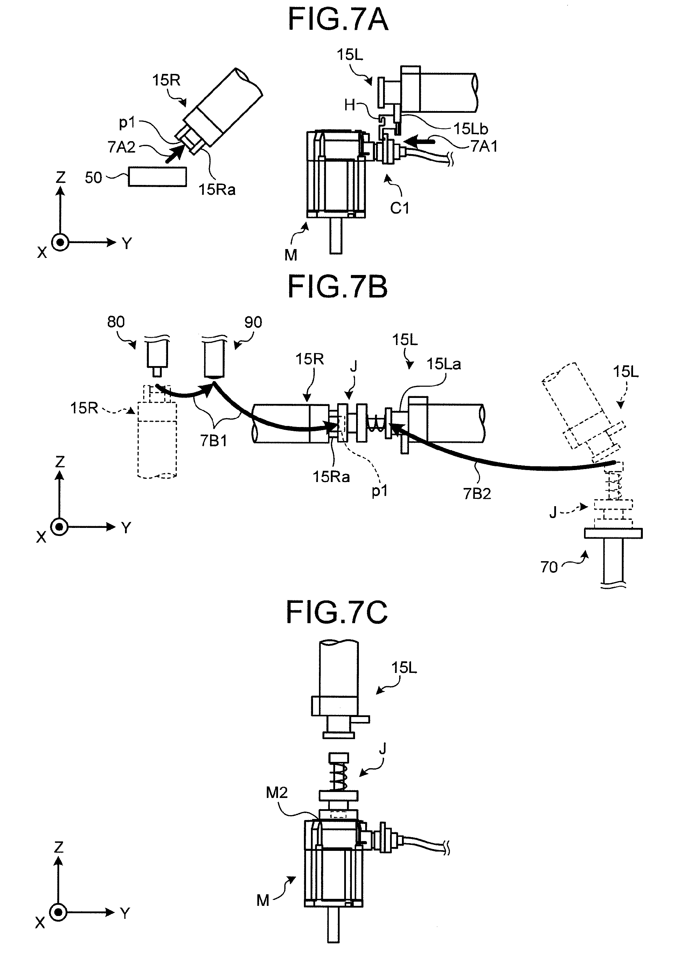

Next, the procedures for attachment of the encoder e that are explained in FIG. 6 are further explained in detail in conjunction with FIG. 7A to FIG. 7N including a series of operations of the robot 10. FIG. 7A to FIG. 7N are explanatory views for explaining the procedures for attachment of the encoder e.

Here, the connector C corresponding to the motor M is given a symbol "C1", and the connector C corresponding to the encoder e is given a symbol "C2" for the explanation to be made hereinafter.

A series of operations of the robot 10 described below are all instructed from the control unit 110.

First of all, as illustrated in FIG. 7A, the robot 10 grips the connector hook H to which the connector C1 is connected with the use of the second left gripper 15Lb of the left hand 15L to remove the connector hook H from the connector unit 20, and connects the removed connector C1 to the motor M (see an arrow 7A1 in FIG. 7A).

Here, direct-current power is supplied to the motor M, the "reference-point return" operation of the motor M is performed and, at the same time, the motor M assumes a state in which the "excitation lock" is applied to the motor M. Hereinafter, for the sake of convenience, the illustration of the connector hook H may be omitted.

The robot 10 picks up the first part p1 from the first parts feeder 50 with the use of the gripper 15Ra of the right hand 15R (see an arrow 7A2 in FIG. 7A).

Subsequently, as illustrated in FIG. 7B, the robot 10 transfers the first part p1 picked up with the use of the gripper 15Ra of the right hand 15R to the grease application unit 80 to apply grease to the predetermined portion of the first part p1. Thereafter, the first part p1 is transferred to the image pick-up area of the camera unit 90, the application state of grease is inspected based on image pick-up data, and the right hand 15R is turned to face the left hand 15L in an opposed manner (see arrows 7B1 in FIG. 7B).

The robot 10 grips the jig J with the use of the first left gripper 15La of the left hand 15L to pick up the jig J from the jig unit 70, and the left hand 15L is turned to face the right hand 15R in an opposed manner (see an arrow 7B2 in FIG. 7B).

The first part p1 gripped by the gripper 15Ra is attached to the bottom of the jig J gripped by the first left gripper 15La.

Subsequently, as illustrated in FIG. 7C, the robot 10 places the jig J on the bracket M2 arranged on the anti-load side of the motor M with the use of the left hand 15L.

Here, although not illustrated in the drawings, the motor M is slid to the principal part of the parts press-fit unit 40 by the motor transfer mechanism 30.

Subsequently, as illustrated in FIG. 7D, the jig J is depressed downwardly in the perpendicular direction by a press-fit part 41 with which the parts press-fit unit 40 is provided (see an arrow 7D1 in FIG. 7D), and the first part p1 is pressed into the end portion of the shaft M1 exposed in the inside of the bracket M2 by way of the jig J. After press-fitting in such a manner as above, the motor M is slid to the place in front of the robot 10 by the motor transfer mechanism 30.

Here, although not illustrated in the drawings, the jig J is removed from the motor M slid to the place in front of the robot 10 with the use of the left hand 15L, and housed in the jig unit 70 again.

Subsequently, as illustrated in FIG. 7E, power is supplied to the motor M from the inverter via the connector C1, and the shaft M1 is rotated about the axis AXZ (see a two-headed arrow in FIG. 7E). In this manner, while the shaft M1 is rotated, the degree of inclination, the height position, and the like of the first part p1 are inspected with the use of the sensor unit 15Lc of the left hand 15L.

Here, FIG. 7E illustrates an example that the sensor unit 15Lc is a non-contact type sensor and irradiates a light op to perform the above-mentioned inspection. However, a contact type sensor provided with a probe or the like may be used.

As illustrated in FIG. 7F, the gripper 15Ra of the right hand 15R grips the first tool T1. Here, the first tool T1 is a handling tool for rotation torque measurements, and confirms whether normal rotation torque is generated in rotating the shaft M1 to which the first part p1 is attached.

Next, although not illustrated in the drawings, the robot 10 picks up the second part p2 from the second parts feeder 60 with the use of the gripper 15Ra of the right hand 15R.

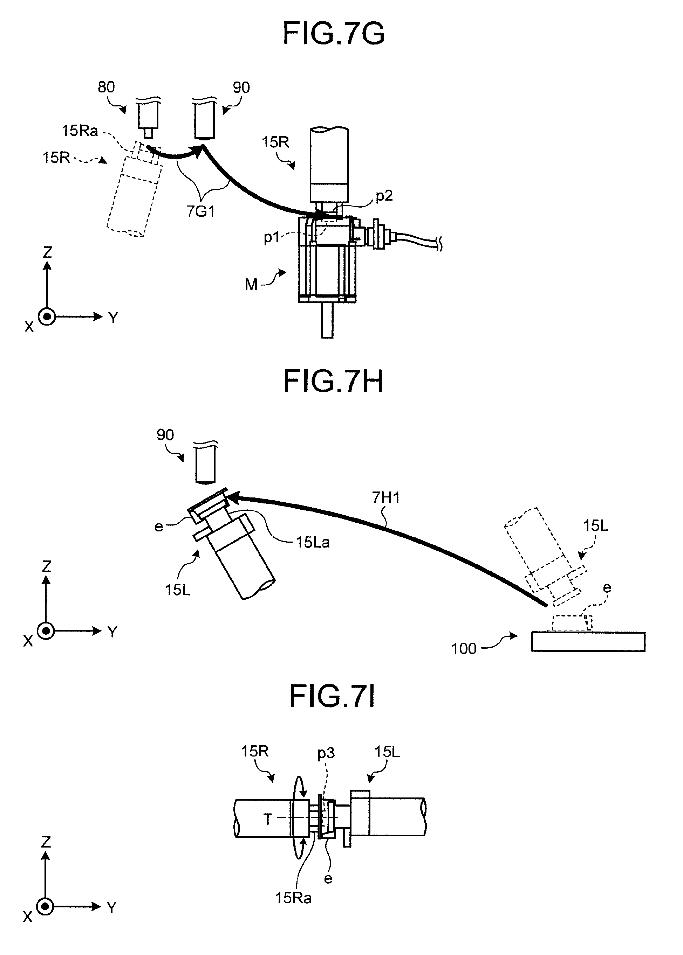

As illustrated in FIG. 7G, the robot 10 transfers the second part p2 picked up with the use of the gripper 15Ra of the right hand 15R to the grease application unit 80 to apply grease to the predetermined portion of the second part p2. Thereafter, the second part p2 is transferred to the image pick-up area of the camera unit 90, the application state of grease is inspected based on image pick-up data, and the second part p2 is attached to the first part p1 (see arrows 7G1 in FIG. 7G).

Subsequently, as illustrated in FIG. 7H, the robot 10 grips and picks up the encoder e from the encoder stocker 100 with the use of the first left gripper 15La of the left hand 15L, and transfers the encoder e to the image pick-up area of the camera unit 90 (see an arrow 7H1 in FIG. 7H).

The state of each member (the above-mentioned third part p3, an O ring, or the like) attached to the encoder e in advance is inspected based on image pick-up data acquired by the camera unit 90.

As illustrated in FIG. 7I, the robot 10 turns the left hand 15L and the right hand 15R to face each other in an opposed manner. In this case, when it is necessary to adjust the position of the third part p3 in the inside of encoder e in the rotational direction about the axis T, the position of the third part p3 gripped by the gripper 15Ra is adjusted in the rotational direction about the axis T (see a two-headed arrow in FIG. 7I).

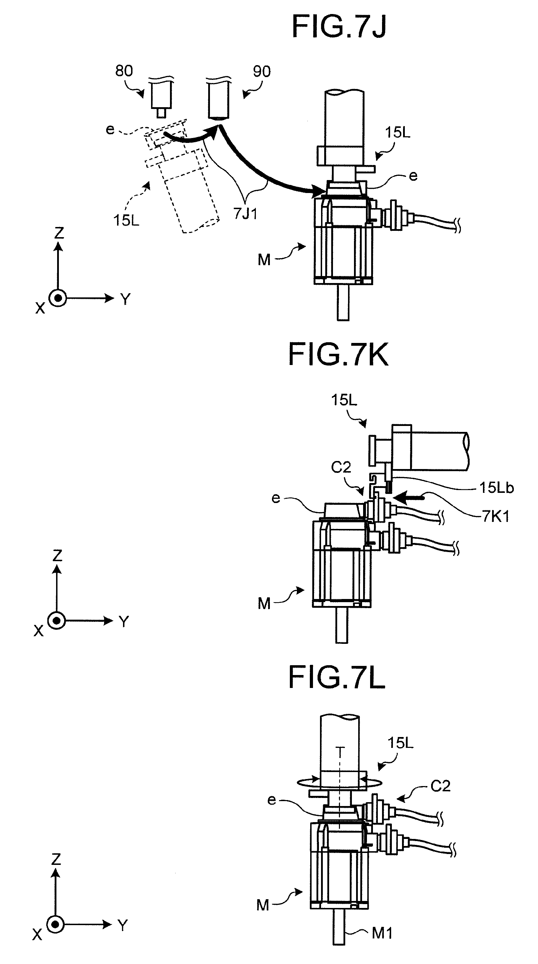

Subsequently, as illustrated in FIG. 7J, the robot 10 transfers the encoder e to the grease application unit 80 with the use of the left hand 15L to apply grease to the predetermined portion (the above-mentioned third part p3) of the encoder e. Thereafter, the encoder e is transferred to the image pick-up area of the camera unit 90, the application state of grease is inspected based on image pick-up data, and the encoder e is temporarily placed on the motor M (see arrows 7J1 in FIG. 7J).

As illustrated in FIG. 7K, the robot 10 removes the connector C2 from the connector unit 20 with the use of the second left gripper 15Lb of the left hand 15L, and connects the removed connector C2 to the encoder e (see an arrow 7K1 in FIG. 7K). Furthermore, the control unit 110 acquires information with respect to the encoder e via the connector C2.

The information contains, for example, the identifier of the type of the encoder e, and the control unit 110 determines whether the encoder e temporarily placed on the motor M is correct during attachment of the encoder e to the motor M based on the identifier.

In addition, the information contains the reference point of the encoder e, and the control unit 110 instructs the robot 10 to perform the operation of rotating the encoder e about the shaft M1 so that the reference point of the encoder e coincides with the reference point of the motor M.

That is, as illustrated in FIG. 7L, the left hand 15L adjusts the direction of the encoder e in the rotational direction about the axis T.

Subsequently, as illustrated in FIG. 7M, the gripper 15Ra of the right hand 15R grips the second tool T2. Here, the second tool T2 is a handling tool for torque tightening. That is, with the use of the second tool T2, the encoder e is fixed to the bracket M2 by screwing the screws sc (see FIG. 6).

Furthermore, as illustrated in FIG. 7N, the robot 10 removes the connector C1 from the motor M and the connector C2 from the encoder e with the use of the second left gripper 15Lb of the left hand 15L (see arrows 7N1 in FIG. 7N). Thus explained, the procedures for attachment of the encoder e to one motor M are completed.

As described above, the robot system according to embodiment includes a robot and a control unit.

The robot performs multi-axis operations based on instructions on the operations from the control device.

The control unit instructs the power source to supply power to a partially fabricated item that includes a movable member and is controllable by receiving power to control the movable member, and instructs the robot to perform the operation of attaching a predetermined member to the partially fabricated item.

Therefore, the robot system according to the embodiment is capable of assembling a product having a movable member with sufficient accuracy.

Incidentally, in the above-mentioned embodiment, the explanation is made by taking the case where a partially fabricated item or a product that completes the assembly thereof is a motor and a movable member is a shaft, as an example. However, the embodiment is not limited to the example, and a partially fabricated item or a product that has a movable member that is controllable by receiving power may be applicable.

Furthermore, the units formed separately from each other in the above-mentioned embodiment may be formed in one body. For example, the first parts feeder and the second parts feeder may be constituted as one intermediate member feeder.

In contrast, one unit may be divided into a plurality of units based on a function or the like. For example, a control unit may be divided into a power supply control unit only for control with respect to supply of power and a robot control unit only for control with respect to a robot.

Furthermore, the left hand and the right hand described in the above-mentioned embodiment are not necessarily required to associate with a left arm and a right arm, respectively. That is, depending on the layout structure or the like in a cell, for example, the right hand and the left hand may be attached to the left arm and the right arm, respectively.

Furthermore, in the above-mentioned embodiment, although a dual-arm robot is exemplified, the present invention is not limited to this embodiment. For example,
a multi-arm robot provided with three or more arms may be used. In addition, in the above-mentioned embodiment, although a multi-axis robot having seven axes for each arm is exemplified, the number of axes is not limited.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

1 robot system
2 cell
10 robot
11 pedestal
12 body
13L left arm
13R right arm
15L left hand
15La first left gripper
15Lb second left gripper
15Lc sensor unit
15R right hand
15Ra gripper
20 connector unit
21 base
22 suspension unit
22a suspension shaft
30 motor transfer mechanism
40 parts press-fit unit
41 press-fit part
50 first parts feeder
60 second parts feeder
70 jig unit
80 grease application unit
90 camera unit
100 encoder stocker
110 control unit
151 gripping face
152 gripping pin
C connector
C1 connector
C2 connector
H connector hook
Ha engagement groove
Hb engagement hole
J jig
M motor
M1 shaft
M2 bracket
M3 connector port
T1 first tool
T2 second tool
e encoder
e1 connector port
p1 first part
p2 second part
p3 third part

## Claims

1. A robot system comprising:
a robot; and
a control unit configured to cause a power source to supply power to a partially fabricated item including a movable member and to instruct the robot to perform an operation of attaching a predetermined member to the partially fabricated item while controlling the movable member by supplying power, the movable member being able to be controlled by receiving power.

2. The robot system according to claim 1, wherein
the partially fabricated item includes a motor,
the predetermined member includes a position detector, and
the control unit causes the robot to connect a connector to the motor, thereafter causes the power source to supply power to the motor via the connector to determine a reference point that is a rotation reference position of the motor, and instructs the robot to perform an operation of attaching the position detector in such a manner that the determined reference point coincides with a reference point of the position detector.

3. The robot system according to claim 2, wherein the control unit instructs the robot to perform an operation of selecting the connector depending on a type of the motor.

4. The robot system according to claim 2 or 3, wherein
the movable member includes a shaft of the motor, and
the control unit causes the robot to place temporarily the position detector on the motor, thereafter causes the robot to connect a connector to the position detector, and instructs the robot to perform an operation of rotating the position detector about the shaft so that the reference point of the position detector acquired via the connector coincides with the reference point of the motor.

5. The robot system according to claim 4, wherein the control unit causes the robot to inspect a fitting state of an intermediate member fitted onto the shaft before the position detector is attached, while rotating the shaft.

6. The robot system according to claim 5, further comprising:
a camera having a predetermined image pick-up area, wherein
when the robot holds the position detector or the intermediate member, the control unit causes the robot to transfer the position detector or the intermediate member onto the image pick-up area and inspects a state of the position detector or the intermediate member on the basis of image pick-up data picked up by the camera.
